# EUROPÄISCHE PATENTSCHRIFT

(11) **EP 2 885 980 B1**
(45) Veröffentlichungstag und Bekanntmachung des Hinweises auf die Patenterteilung: **06.04.2016**
(21) Anmeldenummer: 14004294.6
(22) Anmeldetag: 18.12.2014
(51) Int. Cl.: A23J 1/00, A23J 1/14, A23K 10/10, A23K 10/40, A23L 33/17

(54) **Verfahren und Anlage zur Gewinnung von pflanzlichem Protein, insbesondere als proteinreiches Nahrungs- oder Futtermittel, sowie proteinreiches Nahrungs- und Futtermittel**
Method and system for extraction of vegetable protein, in particular as protein-rich foodstuff or animal feed, and protein-rich human and animal food
Procédé et dispositif de fabrication de protéines végétales, en particulier pour l'alimentation animale et humaine riches en protéines

(30) Priorität: 19.12.2013 DE 102013021294
(43) Veröffentlichungstag der Anmeldung: 24.06.2015
(73) Patentinhaber: Kramerbräu Saaten und Öle GmbH, 85276 Pfaffenhofen (DE)
(72) Erfinder: Pscheidl, Markus, 85296 Rohrbach (DE); Hammerl, Peter, 85276 Pfaffenhofen (DE)
(74) Vertreter: Liebl, Thomas

(56) Entgegenhaltungen:
- CA-A1- 2 408 551
- US-A- 4 158 656
- US-A1- 2004 146 628
- US-A1- 2012 009 287

## Beschreibung

Die Erfindung betrifft ein Verfahren zur Gewinnung von pflanzlichem Protein, insbesondere eines pflanzlichen Proteinpulvers oder Proteinmehls als proteinreiches Nahrungsmittel, aus geschälten Sonnenblumenkernen nach Anspruch 1 sowie aus teilgeschälten Sonnenblumenkernen nach Anspruch 5. Weiter betrifft die Erfindung ein aus geschälten Sonnenblumenkernen hergestelltes proteinreiches Nahrungsmittel nach Anspruch 11 sowie ein aus geschälten Sonnenblumenkernen hergestelltes proteinreiches Nahrungsmittel nach Anspruch 14.

In der Regel gelten Proteine als die wertvollsten Nährstoffe in Lebensmitteln. Neben den tierischen Proteinen dienen vermehrt auch Pflanzen als Proteinlieferanten. Neben den Samen von proteinreichen Leguminosen, wie beispielsweise Lupine, Erbse, Ackerbohne, sind, nach einer entsprechenden Reduzierung des Ölgehalts, auch Samen typischer Ölpflanzen, wie Soja und Raps, reich an Protein. Ähnliches gilt auch für viele Stärkepflanzen wie Weizen und Mais, die in ihren Samen ebenfalls Proteine bzw. Eiweiße gespeichert haben.

Derartiges pflanzliches Protein, insbesondere Sojaprotein, gewinnt in der Nahrungsmittelproduktion eine immer stärkere Bedeutung. Ein Problem der zum Beispiel Sojaproteine ist jedoch, dass diese oftmals mit gentechnisch veränderten Organismen verunreinigt sind (GVO-Problematik) sowie deren allergene Wirkung. Des Weiteren sind derartige Proteine oftmals nicht glutenfrei.

Des Weiteren ist es allgemein bekannt, Sonnenblumenkerne in einer Ölpresse, auch Ölmühle genannt, zu verpressen, wobei das so erhaltene Öl als Wertstoff regelmäßig raffiniert wird und zum Beispiel als Speiseöl Verwendung findet. Der als Abfall in der Ölpresse anfallende Presskuchen findet in der Regel in der Futtermittelherstellung Verwendung.

Aus der WO 2010/097238 A2 ist bereits ein Verfahren zur Herstellung von Proteinpräparaten aus Sonnenblumenkernen bekannt, bei dem geschälte Sonnenblumenkerne in einem ersten Verfahrensschritt durch Pressen auf einen Fettgehalt zwischen 10 und 35 Gew.-%, vorzugsweise 12 bis 25 Gew.-% und höchst bevorzugt 17 bis 25 Gew.-% teilentölt werden. Die so entölten Sonnenblumenkerne werden anschließend ohne weitere Vorbehandlung einer Extraktionsstufe zugeführt, in der unter Einsatz wenigstens eines Lösungsmittels eine weitere Entölung auf einen Restfettgehalt von unter 5 Gew.-% erfolgt und letztendlich ein Proteinpräparat mit dem gewünschten hohen Proteingehalt zwischen 50 und 70%, bezogen auf die Trockenmasse, erhalten wird. Insgesamt handelt es sich hierbei um eine relativ aufwendige und kostenintensive Proteinpräparatherstellung.

Die CA 2 408 551 A1 betrifft ein Verfahren zur Futtererzeugung, insbesondere zur Fischfuttererzeugung, bei dem ölhaltige Ausgangsprodukte mit einem tierischen Abfall vermischt werden, um ein entsprechendes Futtermittel herzustellen. Ziel ist es protein- und fettreiche Endprodukte zu erhalten.

Die US2012/009287 A1 offenbart ebenso wie die US2Q04/0146628 A1 ein Proteinpräparat, das durch Extraktion unter Einsatz wenigstens eines Lösungsmittels erzeugt wird, um einen hohen Proteingehalt zu erzielen. Aufgabe der Erfindung ist es, ein Verfahren zur Gewinnung von pflanzlichem Protein, insbesondere eines pflanzlichen Proteinpulvers oder Proteinmehls als proteinreiches Nahrungsmittel, zur Verfügung zu stellen, mit dem bzw. mit der ein, insbesondere für eine vegane, vegetarische, GVO-, soja-, gluten- und laktosefreie Ernährung geeignetes, pflanzliches Proteinprodukt auf einfache, preiswerte und funktionssichere Weise hergestellt werden kann. Ferner ist es eine Aufgabe der vorliegenden Erfindung, ein derartiges proteinreiches, pflanzliches Nahrungsmittel bzw. Futtermittel zur Verfügung zu stellen.

Diese Aufgabe wird gelöst mit den Merkmalen der unabhängigen Patentansprüche. Vorteilhafte Ausgestaltungen sind jeweils Gegenstand der darauf rückbezogenen Unteransprüche.

Gemäß Patentanspruch 1 wird ein Verfahren zur Gewinnung von pflanzlichem Protein, insbesondere eines pflanzlichen Proteinpulvers oder -mehls als proteinreiches Nahrungsmittel, vorgeschlagen, bei dem geschälte Sonnenblumenkerne als Ausgangsprodukt einer, einer Pressstufe vorgeschalteten Vorerwärmungseinrichtung zugeführt werden, in der die geschälten Sonnenblumenkerne auf eine definiert vorgegebene Temperatur, insbesondere auf eine Temperatur von 25°C bis 55°C, erwärmt werden. Die vorgewärmten geschälten Sonnenblumenkerne werden anschließend mittels einer Zudosiereinrichtung der Pressstufe zugeführt, insbesondere gewichts- und/oder volumengesteuert zugeführt. In der wenigstens eine Ölpresse aufweisenden Pressstufe werden dann die vorgewärmten geschälten Sonnenblumenkerne ein- oder mehrstufig, insbesondere ein- oder besonders bevorzugt zweistufig, verpresst, und zwar dergestalt, dass - neben dem ausgepresstem Öl - ein proteinreicher Sonnenblumenkern-Presskuchen erzeugt wird, der einen Restfettgehalt von größer oder gleich 5 Gew.-% bis kleiner oder gleich 9 Gew.-%, höchst bevorzugt von größer oder gleich 7 Gew.-% bis kleiner oder gleich 9 Gew.-%, jeweils bezogen auf die Trockenmasse, und einen Proteingehalt von wenigstens bzw. größer oder gleich 40%, bevorzugt von wenigstens 50%, höchst bevorzugt von größer oder gleich 55% bis kleiner oder gleich 65%, jeweils bezogen auf die Trockenmasse, aufweist.

Mit einer derartigen erfindungsgemäßen Verfahrensführung wird durch reines Verpressen und somit ohne zusätzliches aufwendiges Extraktionsverfahren ein, einen sehr geringen Fettgehalt und einen sehr hohen Proteingehalt aufweisendes pflanzliches Proteinprodukt erhalten, das sich insbesondere für eine vegane, vegetarische, GVO-, soja-, gluten-, und laktosefreie Ernährung eignet, zum Beispiel in Verbindung mit pflanzlichen Getränken, Shakes und Desserts. Ebenfalls kann dieses pflanzliche Proteinprodukt in pflanzlichen Brotaufstrichen Verwendung finden. Desweiteren kann das erhaltene pflanzliche Proteinprodukt auch als Fleischersatz bzw. zum Fleischaustausch in Wurst dienen. Desweiteren lassen sich mit einem derartigen pflanzlichen Proteinprodukt Schokoladen- und Cerialienriegel herstellen. Ebenso können Cremes, Soßen und Dressings mit einem derartigen pflanzlichen Proteinprodukt erstellt werden. Das erfindungsgemäß erhaltene pflanzliche Proteinprodukt eignet sich zudem hervorragend als Nahrungsergänzungsmittel. Die Begrifflichkeit Nahrungsmittel ist hierbei vorstehend und nachstehend ausdrücklich in einem weiten Sinne zu verstehen und soll ausdrücklich auch die Futtermittel umfassen, und zwar im Sinne von Nahrungs- und/oder Futtermittel. Zudem ist auch die Begrifflichkeit geschälte Sonnenblumenkerne in einem weiten Sinne zu verstehen und soll neben ganzen Kernen explizit auch gebrochene Kerne (egal ob Grobbruch oder Feinbruch) oder Gries etc. umfassen.

Der Proteingehalt ist definiert als der Gehalt, der sich aus der Bestimmung des Stickstoffs und dessen Multiplikation mit dem Faktor 6,25 errechnet und ist in Prozent, bezogen auf die Trockenmasse angegeben.

Der Fettgehalt ist bestimmt nach der von Büchi entwickelten Caviezel-Methode, mit der der Gesamt-Fettgehalt des nach der Pressstufe erhaltenen Presskuchens in Prozent, bezogen auf die Trockenmasse angegeben wird.

Um das gewünschte Endprodukt zu erhalten, ist es von besonderem Vorteil, wenn die als Ausgangsprodukt dienenden geschälten Sonnenblumenkerne einen Restschalengehalt von kleiner oder gleich 5 Gew.-% aufweisen und/oder eine bezüglich der Anwesenheit von Fremdkörpern, Verunreinigungen (insbesondere auch Schalenresten als Verunreinigungen) und tierischen Schädlingen definiert hohe technische Reinheit aufweisen, die bevorzugt größer oder gleich 98% ist. Für den Fall, dass die geschälten Sonnenblumenkerne diese geforderte Reinheit nicht aufweisen, ist vor deren Zuführung zur Vorerwärmungseinrichtung gegebenenfalls eine Reinigungseinrichtung vorzusehen, in der die Aufreinigung auf die definiert vorgegebene technische Reinheit erfolgen kann.

Gemäß einer alternativen erfindungsgemäßen Lösung wird gemäß Anspruch 5 ein Verfahren zur Gewinnung von pflanzlichem Protein, insbesondere eines pflanzlichen Proteinpulvers oder -mehls als proteinreiches Futtermittel, vorgeschlagen, bei dem teilgeschälte Sonnenblumenkerne mit einem Restschalengehalt von größer 5 Gew.-% als Ausgangsprodukt einer, einer Pressstufe vorgeschalteten Vorerwärmungseinrichtung zugeführt werden, in der die teilgeschälten Sonnenblumenkerne auf eine definiert vorgegebene Temperatur, insbesondere auf eine Temperatur von 25°C bis 55°C, erwärmt werden. Weiter werden die vorgewärmten teilgeschälten Sonnenblumenkerne der Pressstufe mittels einer Zudosiereinrichtung zugeführt, insbesondere gewichts- und/oder volumengesteuert zugeführt, wobei die vorgewärmten teilgeschälten Sonnenblumenkerne in der wenigstens eine Ölpresse aufweisenden Pressstufe ein- oder mehrstufig, insbesondere ein- oder zweistufig, so verpresst werden, dass, neben dem ausgepresstem Öl, ein proteinreicher Sonnenblumenkern-Presskuchen erzeugt wird, der einen Restfettgehalt von größer oder gleich 8 Gew.-% bis kleiner oder gleich 18 Gew.-% und einen Proteingehalt von größer oder gleich 30% bis kleiner oder gleich 45%, bezogen auf Trockenmasse, aufweist. Auch hier ergeben sich wiederum im Wesentlichen die gleichen Vorteile wie sie bereits oben in Verbindung mit der Verfahrensführung gemäß Anspruch 1 dargestellt worden sind, wenngleich der Restfettgehalt hier auch höher sein kann, was aber für bestimmte Anwendungsfälle weniger störend ist.

Im Stadium vor der Zuführung der Sonnenblumenkerne zu der Ölpresse werden diese regelmäßig zwischengelagert. Um eine derartige Zwischenlagerung auch über einen eventuell längeren Zeitpunkt ohne Schimmelbildung, Hefebildung, Bakterien- und Keimbildung, etc. über einen längeren Zeitraum zu gewährleisten, wird bevorzugt vorgeschlagen, die geschälten bzw. teilgeschälten Sonnenblumenkerne vor deren Zwischenlagerung einer Trocknungseinrichtung zuzuführen, in der die Sonnenblumenkerne auf eine vorgegebene Lager-Feuchtigkeit, bevorzugt auf einen Restfeuchtegehalt an Wasser von kleiner oder gleich 10% getrocknet werden.

Durch den Pressvorgang in einer Ölpresse kommt es regelmäßig zu einer Temperaturerhöhung, oftmals sogar auf Temperaturen von bis zu 75°C, so dass das erzeugte Proteinprodukt bei der Lagerung oder aber insbesondere beim Abfüllen mit höheren Temperaturen in Verpackungen zur Kondensation neigt und damit anfällig für eine Schimmel-, Hefen-, Bakterien- und Keimbildung etc. ist. Gemäß einer besonders bevorzugten erfindungsgemäßen Ausgestaltung wird vorgeschlagen, dass der proteinreiche Sonnenblumenkern-Presskuchen unmittelbar nach der Pressstufe und damit nach dem Verpressen in der wenigstens einen Ölpresse einer Kühl- und/oder Trocknereinrichtung zugeführt wird, in der der proteinreiche Sonnenblumenkern-Presskuchen auf eine definierte Temperatur abgekühlt werden kann und/oder auf eine definierte Restfeuchte getrocknet werden kann. Beispielsweise erfolgt hier eine Trocknung auf eine Temperatur von kleiner oder gleich 15°C, höchstbevorzugt auf eine Temperatur von kleiner oder gleich 8°C. Für den Fall, dass ein definierter Restfeuchtegehalt eingestellt werden soll, wird dieser bevorzugt so eingestellt, dass der Restfeuchtegehalt an Wasser kleiner oder gleich 10% beträgt. Mit einer derartigen Abkühlung bzw. Trocknung wird sichergestellt, dass ein lagerfähiges proteinreiches Nahrungsmittel erhalten wird, das nicht zum Kondensieren neigt und das somit nicht zur Schimmelbildung, Hefenbildung, Bakterien- oder Keimbildung etc. neigt. Ein derartig abgekühltes bzw. auf eine definierte Restfeuchte getrocknetes Proteinprodukt kann zudem ohne die eben genannten Nachteile einfach in entsprechenden Gebinden bzw. Verpackungen abgefüllt gelagert werden. Desweiteren wird durch derartige niedrige Temperaturen sichergestellt, dass tierische Schädlinge inaktiv bleiben. Auch die biologische Aktivität ist bei diesen niedrigen Temperaturen gestoppt, so dass sich das die Qualität bzw. Beschaffenheit des Produkts nicht mehr verändert.

Insbesondere zur Sicherstellung der erfindungsgemäßen Restfett- und Proteingehalte sowie auch zur Beherrschung der im Falle einer einstufigen Verpressung anfallenden relativ großen Ölmenge und/oder für eine pressenschonende Verpressung ist gemäß einer besonders bevorzugten Ausführungsform vorgesehen, dass die Pressstufe mehrere, insbesondere zwei, hintereinander geschaltete Ölpressen aufweist. Optional wird hierbei der in einer ersten bzw. vorherigen Ölpresse erhaltene Sonnenblumenkern-Presskuchen zuerst in einer Kühl- und/oder Trocknereinrichtung abgekühlt und anschließend, insbesondere zerkleinert mittels einer ebenfalls rein optionalen Zerkleinerungseinrichtung, der nachgeschalteten Ölpresse mittels einer wiederum optionalen Zudosiereinrichtung für eine nochmalige Verpressung, insbesondere gewichts- und/oder volumengesteuert, zugeführt. Die der vorgeschalteten Ölpresse nachgeschaltete Kühl- und/oder Trocknungseinrichtung kühlt bzw. trocknet den Presskuchen der vorhergehenden Ölpresse dann bevorzugt auf eine solche Temperatur, wie sie für die nachfolgende Ölpresse benötigt wird, das heißt zum Beispiel auf eine Temperatur von 25°C bis 55°C. Grundsätzlich könnte aber der weiteren Ölpresse aber auch nochmals eine separate Vorerwärmungseinrichtung vorgeschaltet sein, mittels der dann die für diese Ölpresse optimale Temperatur mehr oder weniger unmittelbar pressenseitig eingestellt wird; in diesem Fall könnte dann die der vorhergehenden Ölpresse nachgeschaltete Kühl- und/oder Trocknungseinrichtung den heißen Presskuchen auch auf eine niedrige Temperatur kühlen und/oder auf eine niedrigere Feuchtigkeit trocknen (zum Beispiel wie vorbeschrieben), was insbesondere dann vorteilhaft wäre, wenn der Presskuchen der vorhergehenden Ölpresse nicht zeitnah weiterverarbeitet wird.

Besonders bevorzugt ist hierbei weiter eine Verfahrensführung, bei der der gekühlte und/oder getrocknete proteinreiche Sonnenblumenkern-Presskuchen vor dessen portionsweiser Abfüllung in Verpackungen bzw. Gebinden einer Mahleinrichtung zugeführt wird, in der der Sonnenblumenkern-Presskuchen zu einem Pulver oder Mehl vermahlen wird, zum Beispiel zu einem Pulver oder Mehl mit einer Partikelgröße von kleiner 1000µm vermahlen wird. Ein derartiges feingemahlenes Mehl bzw. Pulver eignet sich hervorragend für die Nahrungsmittelindustrie zur Herstellung von proteinreichen pflanzlichen Lebensmitteln. Nach einer derartigen Mahlstufe ist ebenfalls wiederum bevorzugt eine Kühl- und/oder Trocknungseinrichtung vorgesehen, in der das Proteinpulver oder -mehl auf die zuvor genannte Temperatur und Feuchtigkeit abgekühlt wird. Alternativ kann das Proteinprodukt aber auch ohne Vermahlung der Abfüllstation zugeführt werden.

Die sich mit dem beanspruchten erfindungsgemäßen proteinreichen pflanzlichen Nahrungsmittel bzw. Futtermittel nach den Ansprüchen 11 und 17ergebenden Vorteile entsprechend identisch denjenigen, wie sie zuvor in Verbindung mit den erfindungsgemäßen Verfahrensführungen bereits ausführlich gewürdigt worden sind. Deshalb wird zur Vermeidung von Wiederholungen betreffend die vorteilhafte Ausgestaltung der Anlage und deren Vorteile auf die zuvor gemachten Ausführungen verwiesen.

Gemäß einer besonders bevorzugten Ausgestaltung eines aus geschälten Sonnenblumenkernen hergestellten Nahrungsmittelproduktes weist dieses zudem wenigstens einen der nachfolgend genannten Bestandteile, jeweils bezogen 100g Trockenmasse, auf:
- 8g bis 12g Kohienhydrate;
- 3,4g bis 6,6g einfach ungesättigte Fettsäuren;
- 0,5g bis 0,7g mehrfach ungesättigte Fettsäuren;
- 1,1g bis 1,7g gesättigte Fettsäuren;
- 17g bis 20g Ballaststoffe;
- weniger als 5mg Natrium.

Alternativ oder zusätzlich dazu kann ein derartiges Nahrungsmittel auch noch wenigstens einen der nachfolgend genannten mikrobiologischen Parameter erfüllen:
- aerobe Gesamtkeimzahl kleiner 10000 KBE/g;
- Schimmel kleiner 1000 KGE/g;
- Hefen kleiner 1000 KBE/g;
- Coliforme Keime kleiner 100 KBE/g;
- kein Nachweis von Escherichia coli (E. coli) in 25g Trockenmasse;
- kein Nachweis von Salmonellen in 1 g Trockenmasse.

Die Abkürzung KBE/g steht hierbei für koloniebildende Einheit pro Gramm.

Die erfindungsgemäßen Nahrungsmittel/Futtermittel bzw. Nahrungsmittelprodukte/Futtermittelprodukte werden insbesondere durch eine mehrstufige, insbesondere eine zweistufige, Verpressung von auf eine 'definierte Temperatur vorgewärmten geschälten oder teilgeschälten Sonnenblumenkernen in einer wenigstens eine Ölpresse, bevorzugt zwei Ölpressen, aufweisenden Pressstufe erhalten, wie dies bereits zuvor dargestellt worden ist.

Die Erfindung wird nachfolgend beispielhaft anhand einer Zeichnung sowie anhand eines konkreten Ausführungsbeispiels näher erläutert.

Es zeigen:
- Fig. 1: schematisch eine beispielhafte Ausführungsform einer erfindungsgemäßen Anlage zur Gewinnung eines pflanzlichen Proteinpulvers oder -mehls, und
- Fig. 2 und 3: ein schematisches Fließbild betreffend eine beispielhafte erfindungsgemäße Verfahrensführung.

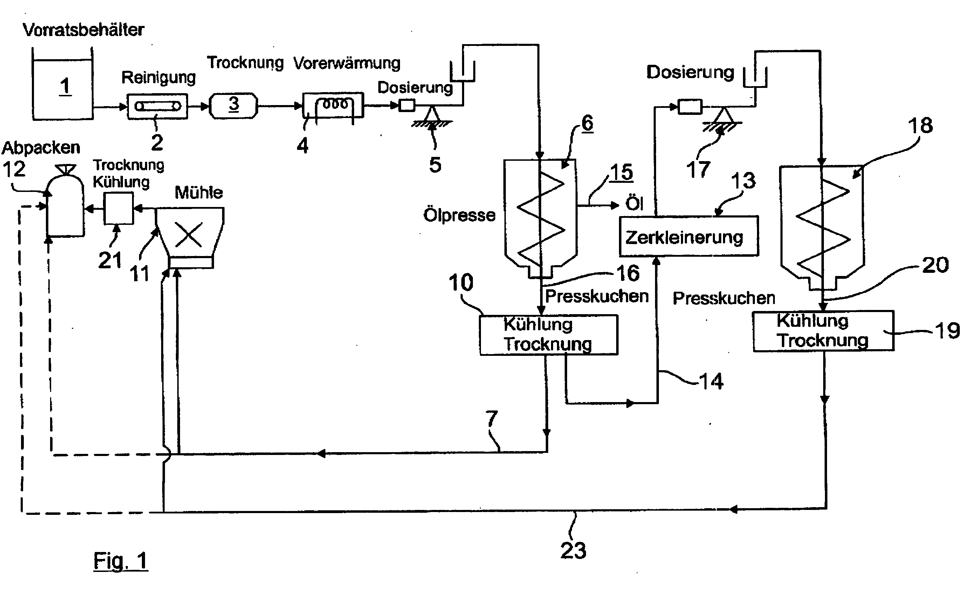

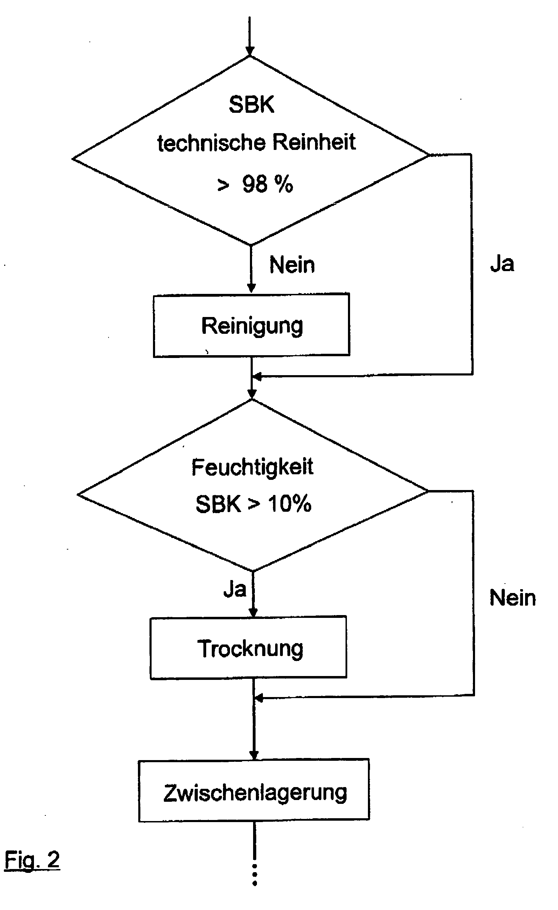

In der Fig. 1 ist eine beispielhafte Ausführungsform einer Anlage gezeigt, die einen Vorratsbehälter 1 aufweist, in dem geschälte Sonnenblumenkerne vorgehalten werden. Entsprechend der erfindungsgemäßen Verfahrensführung (siehe Fig. 2) wird in einem ersten Verfahrensschritt vor der nachfolgend noch erläuterten Pressenstation überprüft, ob die vorgeschälten Sonnenblumenkerne einen Restschalengehalt von kleiner 5 Gew.-% bzw. eine technische Reinheit von beispielsweise größer 98% aufweisen. Hier wird insbesondere geprüft, ob diese frei von Fremdkörpern sind, frei von Verunreinigungen sind, wozu auch die Schalenreste gehören, und ob diese frei von tierischen Schädlingen sind. Für den Fall, dass die technische Reinheit in der geforderten Größenordnung nicht vorliegen sollte, kann das Material einer Reinigungsstufe 2 zugeführt werden, in der dann die geschälten Sonnenblumenkerne auf die geforderte technische Reinheit von hier beispielshaft größer 98% gereinigt werden. Bestandteil dieser Reinigungsstufe 2 kann zum Beispiel ein Leichtgut- oder Schwergutausleser, ein Sieb, ein Röntgengerät, etc. sein.

Wie der Fig. 1 weiter entnommen werden kann, kann der Reinigungsstufe 2 eine Trocknungsstufe 3 nachgeschaltet sein, der die geschälten Sonnenblumenkerne dann zugeführt werden können, wenn diese eine definierte vorgegebene Feuchtigkeit von 10% übersteigen. In der Trocknungsstufe 3 erfolgt dann eine Trocknung auf bzw. unter diese Feuchtigkeit, um sicherzustellen, dass die als Ausgangsstoff dienenden geschälten Sonnenblumenkerne für eine bestimmte Zeit ohne Schimmelbildung, Hefenbildung, Keim- und Bakterienbildung zwischengelagert werden können. Die Trocknungsstufe 3 könnte der Reinigungsstufe 2 grundsätzlich auch vorgeschaltet sein.

Werden die zwischengelagerten, gegebenenfalls vorgereinigten und gegebenenfalls auf eine definierte Restfeuchtigkeit getrockneten, geschälten Sonnenblumenkerne schließlich der Pressenstufe zugeführt, werden diese in einem ersten Schritt einer pressenstufenseitigen Vorerwärmungseinrichtung 4 zugeführt, in der die geschälten Sonnenblumenkerne auf eine definiert vorgegebene Temperatur, zum Beispiel auf eine Temperatur von zum Beispiel ca. 30 bis 40°C vorerwärmt werden.

Nach der Vorerwärmung werden die vorgewärmten, geschälten Sonnenblumenkerne dann einer Dosiereinrichtung 5 zugeführt, mittels der einer ersten Ölpresse 6, vorzugsweise gewichts- und/oder volumengesteuert, eine definiert vorgegebene Menge an vorgewärmten, geschälten Sonnenblumenkernen innerhalb einer definiert vorgegebenen Zeitspanne zugeführt werden. Bei der Dosiereinrichtung 5 kann es sich zum Beispiel um eine Zellenradschleuse oder eine Dosierschnecke handeln.

In der, zum Beispiel durch eine Schneckenpresse gebildeten, Ölpresse 6 selbst werden dann die vorgewärmten, geschälten Sonnenblumenkerne so verpresst, dass neben dem ausgepressten Öl 15 ein proteinreicher Sonnenblumenkern-Presskuchen 16 erzeugt wird.

Dieser Presskuchen 16 wird dann optional unmittelbar nach der Ölpresse 6 in einer Kühl- und/oder Trocknungseinrichtung 10 gekühlt. Die Kühl- und/oder Trocknungsleistung bestimmt sich dabei vor allem auch nach den evtl. nachfolgenden Prozessschritten bzw. -alternativen, die nachfolgend im Einzelnen erläutert werden.

Der Presskuchen 16 kann, sofern er nach der Pressung in der Ölpresse 6 bereits den gewünschten Restfettgehalt von größer oder gleich 5 Gew.-% bis kleiner oder gleich 9 Gew.-%, bezogen auf die Trockenmasse, und einen Proteingehalt von größer 40%, bezogen auf die Trockenmasse, aufweisen sollte, was aber eher nur in Ausnahmefällen der Fall sein dürfte, unmittelbar und direkt (Stoffstrom 7) nach dem Abkühlen in einer Kühl- und/oder Trocknungseinrichtung 10, in der er beispielsweise auf eine Temperatur von kleiner oder gleich 15°C, höchst bevorzugt auf eine Temperatur von kleiner oder gleich 8°C, abgekühlt wird und/oder auf einen Restfeuchtegehalt an Wasser von kleiner oder gleich 10% getrocknet wird, einer Mahleinrichtung 11 oder alternativ, wie strichliert dargestellt, direkt einer Verpackungsstation 12 zugeführt werden.

Das Trocknen bzw. Kühlen ist erforderlich, um ein lagerfähiges und abpackfähiges Produkt zu erhalten.

In der Mahleinrichtung 11 kann der Presskuchen 16 zu einem Pulver oder Mehl vermahlen werden, bevor es in einer Verpackungsstation 12 in entsprechende Gebinde bzw. Verpackungen abgepackt wird. Um auch hier nach dem Mahlvorgang wieder lagerfähige und abpackgeeignete Temperaturen und Feuchtigkeiten zu erhalten, kann die Mahleinrichtung 11 optional selbst gekühlt sein und/oder der Mahleinrichtung 11 optional eine Kühl- und/oder Trocknungseinrichtung 21 nachgeschaltet sein.

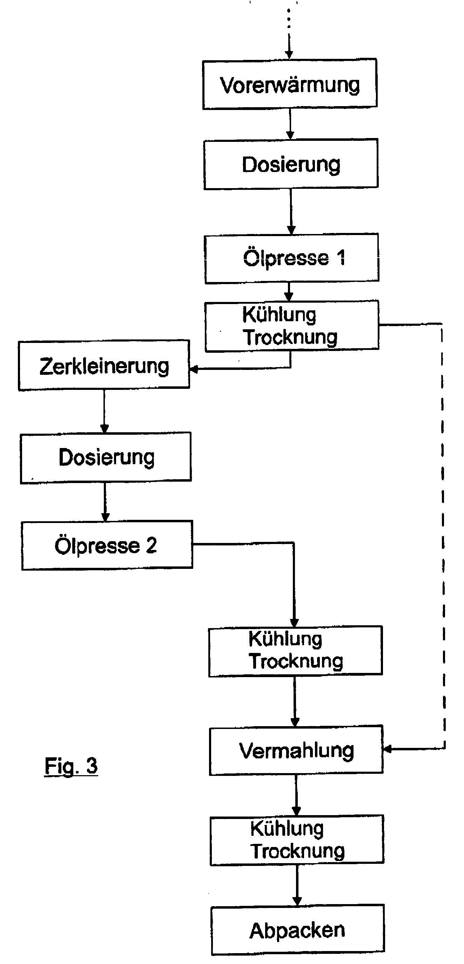

Sofern allerdings der Presskuchen 16, was den Regelfall darstellt (zum Beispiel pressenbedingt und/oder aufgrund einer besonders schonenden Verpressung der Sonnenblumenkerne), noch keinen Restfettgehalt von kleiner oder gleich 9 Gew.-% und noch keinen Proteingehalt von größer oder gleich 40%, jeweils bezogen auf die Trockenmasse, aufweisen sollte, wird, wie dies ergänzend auch aus der die bevorzugte erfindungsgemäße Verfahrensführung zeigenden Fig. 2 und Fig. 3 ersichtlich ist, der Presskuchen entsprechend dem Stoffstrom 14 einer zweiten Ölpresse 18 zugeführt, die zum Beispiel ebenfalls wiederum durch eine Schneckenpresse gebildet sein könnte.

Der zweiten Ölpresse 18 kann optional eine Zerkleinerungseinrichtung 13 vorgeschaltet sein, in der der Presskuchen zerkleinert und anschließend gegebenenfalls einer ebenfalls rein optionalen Dosiereinrichtung 5 zugeführt wird. Mittels dieser Dosiereinrichtung 17 kann einer zweiten Ölpresse 18, vorzugsweise gewichts- und/oder volumengesteuert, eine definiert vorgegebene Menge des erhaltenen Presskuchens 16 aus der ersten Ölpresse innerhalb einer definiert vorgegebenen Zeitspanne zugeführt werden.

In der zweiten Ölpresse 18 erfolgt eine nochmalige schonende Verpressung der Charge auf einen Restfettgehalt, der sicher kleiner oder gleich 9 Gew.-% ist, wobei der Proteingehalt ebenfalls sicher größer oder gleich 40%, bezogen auf die Trockenmasse, beträgt. Mit dieser zweistufigen Verpressung lässt sich auf prozesssichere und funktionssichere Weise insbesondere ein Restfettgehalt von größer oder gleich 5 Gew.-% bis kleiner oder gleich 9 Gew.-%, insbesondere von größer oder gleich 7 Gew.-% bis kleiner oder gleich 9 Gew.-%, erzielen.

Eine Kühlung bzw. Trocknung in der ohnehin lediglich optional nach der ersten Ölpresse 6 vorgesehenen Kühl- und/oder Trocknungseinrichtung 10 kann grundsätzlich auch entfallen. Sollte diese jedoch vorgesehen werden, kühlt bzw. trocknet die der ersten Ölpresse 6 nachgeschaltete Kühl- und/oder Trocknungseinrichtung 10 den heißen Presskuchen 16 dann bevorzugt lediglich auf eine solche Temperatur, wie sie für die zweite Ölpresse 18 benötigt wird, das heißt zum Beispiel auf eine Temperatur von 25°C bis 55°C. Grundsätzlich könnte aber der zweiten Ölpresse 18 alternativ aber auch nochmals eine separate Vorerwärmungseinrichtung vorgeschaltet sein, mittels der dann die für diese Ölpresse optimale Temperatur mehr oder weniger unmittelbar pressenseitig eingestellt wird; hier könnte dann die Kühl- und/oder Trocknungseinrichtung 10 den heißen Presskuchen 16 auch auf niedrigere Temperaturen kühlen und/oder auf eine niedrigere Feuchtigkeit trocknen (zum Beispiel auf eine Temperatur von kleiner oder gleich 15°C, höchst bevorzugt auf eine Temperatur von kleiner oder gleich 8°C, und/oder auf einen Restfeuchtegehalt an Wasser von kleiner oder gleich 10%), was insbesondere dann vorteilhaft wäre, wenn der Presskuchen 16 der ersten Ölpresse 6 nicht zeitnah weiterverarbeitet wird.

Nach der zweiten Ölpresse 18 wird der dort erhaltene Presskuchen bevorzugt einer Kühl- und/oder Trocknungseinrichtung 19 zugeführt, in der der Presskuchen bevorzugt auf eine Temperatur von kleiner oder gleich 15°C, höchst bevorzugt auf eine Temperatur von kleiner oder gleich 8°C, abgekühlt wird und/oder auf einen Restfeuchtegehalt an Wasser von kleiner oder gleich 10% getrocknet wird.

Der so gekühlte und/oder getrocknete Presskuchen 20 kann dann entsprechend Stoffstrom 23 einer Mahleinrichtung 11 oder alternativ, wie strichliert dargestellt, direkt einer Verpackungsstation 12 zugeführt werden.

In der Mahleinrichtung 11 kann der Presskuchen 16 analog zu vorher wieder zu einem Pulver oder Mehl vermahlen werden, bevor es in einer Verpackungsstation 12 in entsprechend Gebinde bzw. Verpackungen abgepackt wird.

Wenngleich die zweistufige Verpressung die bevorzugte Variante ist, könnte gegebenenfalls, wie in der Fig. 3 schematisch dargestellt, grundsätzlich evtl. auch eine einstufige Verpressung analog der Ausführungen zur Fig. 1 ausreichend sein.

Die zuvor gemachten Ausführungen gelten analog für den Einsatz von teilgeschälten Sonnenblumenkernen mit einem Restschalengehalt von zum Teil deutlich über 5 Gew.-%, jedoch mit dem Unterschied, dass hier dann ein proteinreicher Sonnenblumenkern-Presskuchen erzeugt wird, der einen Restfettgehalt von größer oder gleich 8 Gew.-% bis kleiner oder gleich 18Gew.-%, bevorzugt bis kleiner oder gleich 14 Gew.-%, und einen Proteingehalt von größer oder gleich 30% bis kleiner oder gleich 45%, bezogen auf Trockenmasse, aufweist.

Nachfolgend wird anhand eines Ausführungsbeispiels ein mittels der erfindungsgemäßen Verfahrensführung und mittels der Anlage erhaltenes Proteinprodukt näher erläutert:
Beim Ausführungsbeispiel wurden geschälte Sonnenblumenkerne eingesetzt, die gemäß EWG-Kontrollsystem (VO(EWG) 834/2007) erzeugt worden sind. Diese geschälten Sonnenblumenkerne wurden in dreißig Papiersäcken à 25kg lose sowie kühl und trocken gelagert. Es handelte sich um weiß-graue ovale Kerne, mit einer Farbverfälschung von kleiner 2%. Die technische Reinheit bezüglich der Freiheit von tierischen Schädlingen, Fremdkörpern und Verunreinigungen betrug 99,9%. Der Bruchanteil betrug weniger als 15%. Der Anteil der ungeschälten Kerne betrug weniger als 0,5%. Die Konsistenz der geschälten Kerne war fest, nicht spröde und nicht feucht. Der Geruch bzw. Geschmack war arteigen, frei von Fremdgerüchen oder Fremdgeschmack, nussig, ohne Fremdgerüche und nicht bitter. Die Fraßspuren betrugen weniger als 1%. Der Wassergehalt betrug maximal 8%.

### Ausführungsbeispiel

Die oben spezifizierten geschälten Sonnenblumenkerne wurden - entsprechend der obigen Beschreibung- nach einer Vorerwärmung auf ca. 40°C in der Ölpresse 6 und in der Ölpresse 18 zweistufig verpresst und anschließend auf eine Temperatur von 8°C abgekühlt. Der Restfeuchtegehalt nach Trocknung betrug 8%.

Anschließend wurde der so gekühlte und getrocknete Sonnenblumenkern-Presskuchen in der Mahleinrichtung 11 auf eine Partikelgröße von ca. 800µm gemahlen.

Das erhaltene Proteinpulver wies eine beige-braune Farbe auf, der Geruch und Geschmack waren arttypisch, ohne Fremdgeruch und ohne Fremdgeschmack.

Das Proteinmehl wurde anschließend in mehrere 100g-Chargen Trockenmasse aufgeteilt, wobei sich hinsichtlich der Zusammensetzung folgende Ergebnisse ergeben haben:

| | |
|---|---|
| Brennwert | 358kcal/1498kJ |
| Protein | 45% bis 49% |
| Kohlenhydrate | 8g bis 12g |
| Fette | 5g bis 9g |
| einfach ungesättigte Fettsäuren | 3,4g bis 6,6g |
| mehrfach ungesättigte Fettsäuren | 0,5g bis 0,7g |
| gesättigte Fettsäuren | 1,1 g bis 1,7g |
| Ballaststoffe | 17g bis 20g |
| Natrium | weniger als 5mg |

Die Ergebnisse hinsichtlich der mikrobiologischen Parameter dieser Chargen waren wie folgt:

| | |
|---|---|
| aerobe Gesamtkeimzahl | weniger als 10000 KBE/g |
| Schimmel | kleiner 1000 KBE/g |
| Hefen | kleiner 1000 KBE/g |
| Coliforme Keime | kleiner 100 KBE/g |
| Salmonellen | nicht nachweisbar in 25g |
| E. coli | nicht nachweisbar in 1 g |

Das Produkt enthielt keine zu kennzeichnenden Allergene gemäß dem EU-Vital-Konzept.

Das Produkt war gemäß Verordnung EG-Nr. 834/2007 GVO-frei, wobei GVO für gentechnisch veränderte Organismen steht.

Bei einer kühlen, trockenen vor Licht geschützten und dicht verschlossenen Lagerung ist eine Haltbarkeit im Originalgebinde von mindestens 18 Monaten gegeben.

## Patentansprüche

1. Verfahren zur Gewinnung von pflanzlichem Protein,
bei dem geschälte Sonnenblumenkerne als Ausgangsprodukt einer, einer Pressstufe vorgeschalteten Vorerwärmungseinrichtung zugeführt werden, in der die geschälten Sonnenblumenkerne auf eine definiert vorgegebene Temperatur erwärmt werden,
bei dem die vorgewärmten geschälten Sonnenblumenkerne der Pressstufe mittels einer Zudosiereinrichtung zugeführt werden, und
bei dem die vorgewärmten geschälten Sonnenblumenkerne in der wenigstens eine Ölpresse aufweisenden Pressstufe ein- oder mehrstufig verpresst werden und neben dem ausgepresstem Öl ein proteinreicher Sonnenblumenkern-Presskuchen erzeugt wird, der einen Restfettgehalt von größer oder gleich 5 Gew.-% bis kleiner oder gleich 9 Gew.-%, bezogen auf die Trockenmasse, und einen Proteingehalt von größer oder gleich 40%, bezogen auf die Trockenmasse, aufweist.

2. Verfahren nach Anspruch 1, **dadurch gekennzeichnet, dass** der Sonnenblumenkern-Presskuchen einen Restfettgehalt von größer oder gleich 7 Gew.-% bis kleiner oder gleich 9 Gew.-%, bezogen auf die Trockenmasse, aufweist.

3. Verfahren nach Anspruch 1 oder 2, **dadurch gekennzeichnet, dass** der Sonnenblumenkern-Presskuchen einen Proteingehalt von größer oder gleich 50%, bevorzugt von größer oder gleich 55% bis kleiner oder gleich 65%, jeweils bezogen auf die Trockenmasse, aufweist.

4. Verfahren nach einem der vorhergehenden Ansprüche, **dadurch gekennzeichnet, dass** die als Ausgangsprodukt dienenden geschälten Sonnenblumenkerne einen Restschalengehalt von kleiner oder gleich 5 Gew.-% aufweisen und/oder eine bezüglich der Anwesenheit von Fremdkörpern, Verunreinigungen, insbesondere auch Schalenresten als Verunreinigungen, und tierischen Schädlingen definierte technische Reinheit aufweisen, insbesondere eine technische Reinheit von größer oder gleich 98% aufweisen.

5. Verfahren zur Gewinnung von pflanzlichem Protein,
bei dem teilgeschälte Sonnenblumenkerne mit einem Restschalengehalt von größer 5 Gew.-% als Ausgangsprodukt einer, einer Pressstufe vorgeschalteten Vorerwärmungseinrichtung zugeführt werden, in der die teilgeschälten Sonnenblumenkerne auf eine definiert vorgegebene Temperatur erwärmt werden,
bei dem die vorgewärmten teilgeschälten Sonnenblumenkerne der Pressstufe mittels einer Zudosiereinrichtung zugeführt werden, und
bei dem die vorgewärmten teilgeschälten Sonnenblumenkerne in der wenigstens eine Ölpresse aufweisenden Pressstufe ein- oder mehrstufig verpresst werden und neben dem ausgepresstem Öl ein proteinreicher Sonnenblumenkern-Presskuchen erzeugt wird, der einen Restfettgehalt von größer oder gleich 8 Gew.-% bis kleiner oder gleich 18 Gew.-%, bezogen auf die Trockenmasse, und einen Proteingehalt von größer oder gleich 30% bis kleiner oder gleich 45%, bezogen auf Trockenmasse, aufweist.

6. Verfahren nach einem der vorhergehenden Ansprüche, **dadurch gekennzeichnet, dass** die Sonnenblumenkerne zu deren Zwischenlagerung vor der Zuführung zur pressenseitigen Vorerwärmungseinrichtung einer Trocknungseinrichtung zugeführt werden, in der die Sonnenblumenkerne auf eine vorgegebene Lager-Feuchtigkeit, bevorzugt auf einen Restfeuchtegehalt an Wasser von kleiner oder gleich 10% getrocknet werden.

7. Verfahren nach einem der vorhergehenden Ansprüche, **dadurch gekennzeichnet,**
**dass** der proteinreiche Sonnenblumenkern-Presskuchen unmittelbar nach der Pressstufe und damit nach dem Verpressen in der wenigstens einen Ölpresse einer Kühl- und/oder Trocknereinrichtung zugeführt wird, in der:
- der proteinreiche Sonnenblumenkern-Presskuchen auf eine definierte Temperatur abgekühlt wird, bevorzugt auf eine Temperatur von kleiner oder gleich 15°C, höchst bevorzugt auf eine Temperatur von kleiner oder gleich 8°C, abgekühlt wird,
und/oder
- der proteinreiche Sonnenblumenkern-Presskuchen auf eine definierte Restfeuchte getrocknet wird, bevorzugt auf einen Restfeuchtegehalt an Wasser von kleiner oder gleich 10% getrocknet wird.

8. Verfahren nach einem der vorhergehenden Ansprüche, **dadurch gekennzeichnet, dass** die Pressstufe im Falle einer mehrstufigen, insbesondere zweistufigen, Verpressung der vorgewärmten Sonnenblumenkerne mehrere, insbesondere zwei, hintereinander geschaltete Ölpressen aufweist, wobei bevorzugt vorgesehen ist, dass der in einer vorherigen Ölpresse erhaltene Sonnenblumenkern-Presskuchen zuerst in einer Kühl- und/oder Trocknereinrichtung auf eine in Abhängigkeit von der nachfolgenden Ölpresse vorgegebene Temperatur abgekühlt und/oder Feuchtigkeit getrocknet wird und anschließend, insbesondere zerkleinert mittels einer Zerkleinerungseinrichtung, der nachgeschalteten Ölpresse mittels einer Zudosiereinrichtung für eine nochmalige Verpressung, insbesondere gewichts- und/oder volumengesteuert, zugeführt wird.

9. Verfahren nach einem der vorhergehenden Ansprüche, **dadurch gekennzeichnet, dass** der gekühlte und/oder getrocknete proteinreiche Sonnenblumenkern-Presskuchen vor dessen portionsweiser Abfüllung in Verpackungen einer Mahleinrichtung zugeführt wird, in der der Sonnenblumenkern-Presskuchen zu einem Pulver oder Mehl vermahlen wird, insbesondere zu einem Pulver oder Mehl mit einer Partikelgröße von kleiner 1000µm vermahlen wird, oder unmittelbar einer Abfüllstation zugeführt wird.

10. Verfahren nach Anspruch 9, **dadurch gekennzeichnet, dass** das Pulver oder Mehl nach der Mühle einer Kühl- und/oder Trocknungseinrichtung zugeführt wird.

11. Aus geschälten Sonnenblumenkernen mit einem Restschalengehalt von kleiner 5 Gew.-% hergestelltes proteinreiches pflanzliches Nahrungsmittel,
wobei die geschälte Sonnenblumenkerne als Ausgangsprodukt einer, einer Pressstufe vorgeschalteten Vorerwärmungseinrichtung zugeführt werden, in der die geschälten Sonnenblumenkerne auf eine definiert vorgegebene Temperatur erwärmt werden,
wobei die vorgewärmten geschälten Sonnenblumenkerne der Pressstufe mittels einer Zudosiereinrichtung zugeführt werden, und
wobei die vorgewärmten geschälten Sonnenblumenkerne in der wenigstens eine Ölpresse aufweisenden Pressstufe ein- oder mehrstufig verpresst werden und neben dem ausgepresstem Öl ein proteinreicher Sonnenblumenkern-Presskuchen erzeugt wird, **dadurch gekennzeichnet, dass** das Nahrungsmittel einen Fettgehalt von größer oder gleich 5 Gew.-% bis kleiner oder gleich 9 Gew.-%, bezogen auf die Trockenmasse, und einen Proteingehalt von größer oder gleich 40%, bezogen auf die Trockenmasse, aufweist.

12. Nahrungsmittel nach Anspruch 11, **dadurch gekennzeichnet, dass** das Nahrungsmittel wenigstens einen der nachfolgend genannten Bestandteile, jeweils bezogen auf 100g Trockenmasse, aufweist:
- 8g bis 12g Kohlenhydrate;
- 3,4g bis 6,6g einfach ungesättigte Fettsäuren;
- 0,5g bis 0,7g mehrfach ungesättigte Fettsäuren;
- 1,1g bis 1,7g gesättigte Fettsäuren;
- 17g bis 20g Ballaststoffe;
- weniger als 5mg Natrium.

13. Nahrungsmittel nach Anspruch 11 oder 12, **dadurch gekennzeichnet, dass** das Nahrungsmittel wenigstens einen der nachfolgend genannten mikrobiologischen Parameter erfüllt:
- aerobe Gesamtkeimzahl kleiner 10000 KBE/g;
- Schimmel kleiner 1000 KBE/g;
- Hefen kleiner 1000 KBE/g;
- Coliforme Keime kleiner 100 KBE/g;
- kein Nachweis von Escherichia coli in 25g Trockenmasse;
- kein Nachweis von Salmonellen in 1g Trockenmasse.

14. Aus teilgeschälten Sonnenblumenkernen mit einem Restschalengehalt von größer 5 Gew.-% hergestelltes proteinreiches pflanzliches Futtermittel,
wobei die teilgeschälten Sonnenblumenkerne mit einem Restschalengehalt von größer 5 Gew.-% als Ausgangsprodukt einer, einer Pressstufe vorgeschalteten Vorerwärmungseinrichtung zugeführt werden, in der die teilgeschälten Sonnenblumenkerne auf eine definiert vorgegebene Temperatur erwärmt werden,
wobei die vorgewärmten teilgeschälten Sonnenblumenkerne der Pressstufe mittels einer Zudosiereinrichtung zugeführt werden, und
wobei die vorgewärmten teilgeschälten Sonnenblumenkerne in der wenigstens eine Ölpresse aufweisenden Pressstufe ein- oder mehrstufig verpresst werden und neben dem ausgepresstem Öl ein proteinreicher Sonnenblumenkern-Presskuchen erzeugt wird, **dadurch gekennzeichnet, dass** das Futtermittel einen Fettgehalt von größer oder gleich 8 Gew.-% bis kleiner oder gleich 18 Gew.-% und einen Proteingehalt von größer oder gleich 30% bis kleiner oder gleich 45%, bezogen auf Trockenmasse, aufweist.

## Claims

1. Method for extracting vegetable protein,
in which shelled sunflower seeds as starting product are fed into a pre-heating device upstream of a pressing stage, in which the shelled sunflower seeds are heated to a defined preset temperature,
in which the pre-heated shelled sunflower seeds are fed into the pressing stage by means of a metering device, and
in which the pre-heated shelled sunflower seeds are compressed in one or more stages in the pressing stage comprising at least one oil press and, in addition to the oil pressed out, a protein-rich sunflower seed press cake is generated having a residual fat content of greater than or equal to 5% by weight to less than or equal to 9% by weight, based on the dry mass, and a protein content of greater than or equal to 40%, based on the dry mass.

2. Method according to Claim 1, **characterized in that** the sunflower seed press cake has a residual fat content of greater than or equal to 7% to less than or equal to 9% by weight, based on the dry mass.

3. Method according to Claim 1 or 2, **characterized in that** the sunflower seed press cake has a protein content of greater than or equal to 50%, preferably greater than or equal to 55% to less than or equal to 65% by weight, based on the dry mass.

4. Method according to any of the preceding claims, **characterized in that** the shelled sunflower seeds serving as starting product have a residual shell content of less than or equal to 5% by weight and/or have a defined technical purity, in particular a technical purity of greater than or equal to 98%, with respect to the presence of foreign bodies, impurities, particularly also shell residues as impurities, and animal pests.

5. Method for extracting vegetable protein,
in which partially shelled sunflower seeds as starting product having a residual shell content of greater than 5% by weight are fed into a pre-heating device upstream of a pressing stage, in which the partially shelled sunflower seeds are heated to a defined preset temperature,
in which the pre-heated partially shelled sunflower seeds are fed into the pressing stage by means of a metering device, and
in which the pre-heated partially shelled sunflower seeds are compressed in one or more stages in the pressing stage comprising at least one oil press and, in addition to the oil pressed out, a protein-rich sunflower seed press cake is generated having a residual fat content of greater than or equal to 8% by weight to less than or equal to 18% by weight, based on the dry mass, and a protein content of greater than or equal to 30% to less than or equal to 45%, based on the dry mass.

6. Method according to any of the preceding claims, **characterized in that** the sunflower seeds, for storage thereof prior to feeding to the press side pre-heating device, are fed into a drying device in which the sunflower seeds are dried to a preset storage moisture, preferably to a residual moisture content of water of less than or equal to 10%.

7. Method according to any of the preceding claims, **characterized in that**
the protein-rich sunflower seed press cake, after the pressing stage and therefore after the compression in the at least one oil press, is fed directly into a cooling and/or drying device in which:
- the protein-rich sunflower seed press cake is cooled to a defined temperature, preferably to a temperature of less than or equal to 15°C, most preferably to a temperature of less than or equal to 8°C,
and/or
- the protein-rich sunflower seed press cake is dried to a defined residual moisture, preferably to a defined residual moisture content of water of less than or equal to 10%.

8. Method according to any of the preceding claims, **characterized in that** the pressing stage, in the case of a multi-stage, particularly two-stage compression of the pre-heated sunflower seeds has more than one, in particular two oil presses connected in succession, it being preferably provided that the sunflower seed press cake obtained in a previous oil press, in a cooling and/or drying device, is firstly cooled and/or dried to a temperature and/or moisture preset depending on the subsequent oil press and is subsequently fed, in particular comminuted by means of a comminuting device, to the downstream oil press by means of a metering device for a further compression, in particular based on weight and/or volume.

9. Method according to any of the preceding claims, **characterized in that** the cooled and/or dried protein-rich sunflower seed press cake, prior to being filled in portions into packaging, is fed into a grinding device, in which the sunflower seed press cake is ground to a powder or flour, in particular is ground to a powder or flour having a particle size of less than 1000 µm, or is fed directly to a filling station.

10. Method according to Claim 9, **characterized in that** the powder or flour, after grinding, is fed to a cooling and/or drying device.

11. Protein-rich vegetable foodstuff prepared from shelled sunflower seeds having a residual shell content of less than 5% by weight,
in which the shelled sunflower seeds as starting product are fed into a pre-heating device upstream of a pressing stage, in which pre-heating device the shelled sunflower seeds are heated to a defined preset temperature,
in which the pre-heated shelled sunflower seeds are fed into the pressing stage by means of a metering device, and
in which the pre-heated shelled sunflower seeds are compressed in one or more stages in the pressing stage comprising at least one oil press and, in addition to the oil pressed out, a protein-rich sunflower seed press cake is generated, **characterized in that** the foodstuff has a fat content of greater than or equal to 5% by weight to less than or equal to 9% by weight, based on the dry mass, and a protein content of greater than or equal to 40%, based on the dry mass.

12. Foodstuff according to Claim 11, **characterized in that** the foodstuff has at least one of the following specified constituents, in each case based on 100 g of dry mass:
- 8 g to 12 g of carbohydrates;
- 3.4 g to 6.6 g of monounsaturated fatty acids;
- 0.5 g to 0.7 g of polyunsaturated fatty acids;
- 1.1 g to 1.7 g of saturated fatty acids;
- 17 g to 20 g of dietary fibre;
- less than 5 mg of sodium.

13. Foodstuff according to Claim 11 or 12, **characterized in that** the foodstuff meets one of the following specified microbiological parameters:
- total aerobic bacterial count of less than 10000 cfu/g;
- mould less than 1000 cfu/g;
- yeasts less than 1000 cfu/g;
- coliform bacteria less than 100 cfu/g;
- no detectable Escherichia coli in 25 g of dry mass;
- no detectable Salmonella in 1 g of dry mass.

14. Protein-rich vegetable animal feed prepared from partially shelled sunflower seeds having a residual shell content of greater than 5% by weight,
in which the partially shelled sunflower seeds having a residual shell content of greater than 5% by weight as starting product are fed into a pre-heating device upstream of a pressing stage, in which the partially shelled sunflower seeds are heated to a defined preset temperature,
in which the pre-heated partially shelled sunflower seeds are fed into the pressing stage by means of a metering device, and
in which the pre-heated partially shelled sunflower seeds are compressed in one or more stages in the pressing stage comprising at least one oil press and, in addition to the oil pressed out, a protein-rich sunflower seed press cake is generated, **characterized in that** the animal feed has a fat content of greater than or equal to 8% by weight to less than or equal to 18% by weight and a protein content of greater than or equal to 30% to less than or equal to 45%, based on the dry mass.

## Revendications

1. Procédé pour l'obtention de protéine végétale,
dans lequel on envoie des graines de tournesol décortiquées, en tant que produit de départ, à un dispositif de préchauffage, placé en amont d'un étage de pressage, dans lequel les graines de tournesol décortiquées sont préchauffées jusqu'à une température préétablie définie,
dans lequel les graines de tournesol décortiquées, préchauffées, sont envoyées à l'étage de pressage au moyen d'un dispositif d'addition dosée, et
dans lequel les graines de tournesol décortiquées, préchauffées, sont pressées en un ou plusieurs stades dans l'étage de pressage comportant au moins une presse à huile et en plus de l'huile extraite par pression est produit un tourteau de graines de tournesol riche en protéines, qui présente une teneur en matières grasses résiduelles de plus de ou égale à 5 % en poids à moins de ou égale à 9 % en poids, par rapport à la matière sèche, et une teneur en protéines supérieure ou égale à 40 %, par rapport à la matière sèche.

2. Procédé selon la revendication 1, **caractérisé en ce que** le tourteau de graines de tournesol présente une teneur en matières grasses résiduelles de plus de ou égale à 7 % en poids à moins de ou égale à 9 % en poids, par rapport à la matière sèche.

3. Procédé selon la revendication 1 ou 2, **caractérisé en ce que** le tourteau de graines de tournesol présente une teneur en protéines de plus de ou égale à 50 %, de préférence de plus de ou égale à 55 %, à moins de ou égale à 65 %, chaque fois par rapport à la matière sèche.

4. Procédé selon l'une quelconque des revendications précédentes, **caractérisé en ce que** les graines de tournesol décortiquées, utilisées comme produit de départ, présentent une teneur en enveloppes résiduelles supérieure ou égale à 5 % en poids et/ou une pureté technique, définie eu égard à la présence de corps étrangers, d'impuretés, en particulier également de résidus d'enveloppes en tant qu'impuretés, et d'organismes animaux nuisibles, en particulier une pureté technique supérieure ou égale à 98 %.

5. Procédé pour l'obtention de protéine végétale,
dans lequel on envoie des graines de tournesol partiellement décortiquées, ayant une teneur en enveloppes résiduelles de plus de 5 % en poids, en tant que produit de départ, à un dispositif de préchauffage, placé en amont d'un étage de pressage, dans lequel les graines de tournesol partiellement décortiquées sont chauffées jusqu'à une température préétablie définie,
dans lequel les graines de tournesol partiellement décortiquées, préchauffées, sont envoyées à l'étage de pressage au moyen d'un dispositif d'addition dosée, et
dans lequel les graines de tournesol partiellement décortiquées, préchauffées, sont pressées en un ou plusieurs stades dans l'étage de pressage comportant au moins une presse à huile et en plus de l'huile extraite par pression est produit un tourteau de graines de tournesol riche en protéines, qui présente une teneur en matières grasses résiduelles de plus de ou égale à 8 % en poids à moins de ou égale à 18 % en poids, par rapport à la matière sèche, et une teneur en protéines de plus de ou égale à 30 % à moins de ou égale à 45 %, par rapport à la matière sèche.

6. Procédé selon l'une quelconque des revendications précédentes, **caractérisé en ce qu**'avant l'envoi au dispositif de préchauffage du côté presse les graines de tournesol sont envoyées pour leur stockage intermédiaire à un dispositif de séchage, dans lequel les graines de tournesol sont séchées jusqu'à une humidité de stockage préétablie, de préférence jusqu'à une teneur en humidité résiduelle inférieure ou égale à 10 % d'eau.

7. Procédé selon l'une quelconque des revendications précédentes, **caractérisé en ce que**
le tourteau de graines de tournesol riche en protéines est envoyé, immédiatement après l'étage de pressage et donc après le pressage dans ladite au moins une presse à huile, à un dispositif de refroidissement et/ou de séchage, dans lequel :
- le tourteau de graines de tournesol riche en protéines est refroidi jusqu'à une température définie, de préférence jusqu'à une température inférieure ou égale à 15 °C, de façon tout particulièrement préférée jusqu'à une température inférieure ou égale à 8 °C,
et/ou
- le tourteau de graines de tournesol riche en protéines est séché jusqu'à une humidité résiduelle définie, de préférence jusqu'à une teneur en humidité résiduelle inférieure ou égale à 10 % d'eau.

8. Procédé selon l'une quelconque des revendications précédentes, **caractérisé en ce que** l'étage de pressage comporte dans le cas d'un pressage en plusieurs stades, en particulier en deux stades, des graines de tournesol préchauffées, plusieurs, en particulier deux presses à huile raccordées en série, où il est prévu de préférence que le tourteau de graines de tournesol obtenu dans une presse à huile précédente soit d'abord, dans un dispositif de refroidissement et/ou de séchage, refroidi et/ou séché jusqu'à une température et/ou une humidité préétablie(s) en fonction de la presse à huile suivante, et ensuite envoyé, en particulier fragmenté au moyen d'un dispositif de fragmentation, à la presse à huile raccordée en aval, au moyen d'un dispositif d'addition dosée, pour un nouveau pressage, en particulier réglé sur la base du poids et/ou du volume.

9. Procédé selon l'une quelconque des revendications précédentes, **caractérisé en ce que** le tourteau de graines de tournesol riche en protéines, refroidi et/ou séché, est envoyé, avant son introduction par portions dans des emballages, à un dispositif de mouture, dans lequel le tourteau de graines de tournesol est broyé en une poudre ou farine, en particulier en une poudre ou farine ayant une taille de particule de moins de 1 000 µm, ou envoyé directement à un poste de remplissage.

10. Procédé selon la revendication 9, **caractérisé en ce que** la poudre ou farine est envoyée après le moulin à un dispositif de refroidissement et/ou de séchage.

11. Produit alimentaire végétal riche en protéines, préparé à partir de graines de tournesol décortiquées ayant une teneur en enveloppes résiduelles de moins de 5 % en poids,
les graines de tournesol décortiquées étant envoyées, en tant que produit de départ, à un dispositif de préchauffage, placé en amont d'un étage de pressage, dans lequel les graines de tournesol décortiquées sont chauffées jusqu'à une température préétablie définie,
les graines de tournesol décortiquées, préchauffées, étant envoyées à l'étage de pressage au moyen d'un dispositif d'addition dosée, et
les graines de tournesol décortiquées, préchauffées, étant pressées en un ou plusieurs stades dans l'étage de pressage comportant au moins une presse à huile, et en plus de l'huile extraite par pression étant produit un tourteau de graines de tournesol riche en protéines, **caractérisé en ce que** le produit alimentaire présente une teneur en matières grasses de plus de ou égale à 5 % en poids à moins de ou égale à 9 % en poids, par rapport à la matière sèche, et une teneur en protéines supérieure ou égale à 40 %, par rapport à la matière sèche.

12. Produit alimentaire selon la revendication 11, **caractérisé en ce que** le produit alimentaire comporte au moins un des constituants nommés ci-après, chaque fois par rapport à 100 g de matière sèche :
- 8 g à 12 g de glucides ;
- 3,4 g à 6,6 g d'acides gras mono-insaturés ;
- 0,5 g à 0,7 g d'acides gras polyinsaturés ;
- 1,1 g à 1,7 g d'acides gras saturés ;
- 17 g à 20 g de fibres alimentaires ;
- moins de 5 mg de sodium.

13. Produit alimentaire selon la revendication 11 ou 12, **caractérisé en ce que** le produit alimentaire satisfait à au moins l'un des paramètres microbiologiques suivants :
- nombre total de germes aérobies inférieur à 10 000 ufc/g ;
- nombre de moisissures inférieur à 1 000 ufc/g
- nombre de levures inférieur à 1 000 ufc/g ;
- nombre de germes coliformes inférieur à 100 ufc/g ;
- aucune détection d'*Escherichia coli* dans 25 g de matière sèche ;
- aucune détection de salmonelles dans 1 g de matière sèche.

14. Aliment végétal pour animaux riche en protéines, produit à partir de graines de tournesol partiellement décortiquées ayant une teneur en enveloppes résiduelles de plus de 5 % en poids,
les graines de tournesol partiellement décortiquées, ayant une teneur en enveloppes résiduelles de plus de 5 % en poids, étant envoyées, en tant que produit de départ, à un dispositif de préchauffage, placé en amont d'un étage de pressage, dans lequel les graines de tournesol partiellement décortiquées sont chauffées jusqu'à une température préétablie définie,
les graines de tournesol partiellement décortiquées, préchauffées, étant envoyées à l'étage de pressage au moyen d'un dispositif d'addition dosée, et
les graines de tournesol partiellement décortiquées, préchauffées, étant pressées en un ou plusieurs stades dans l'étage de pressage comportant au moins une presse à huile et en plus de l'huile extraite par pression étant produit un tourteau de graines de tournesol riche en protéines, **caractérisé en ce que** l'aliment pour animaux présente une teneur en matières grasses de plus de ou égale à 8 % en poids à moins de ou égale à 18 % en poids et une teneur en protéines de plus de supérieure ou égale à 30 % à moins de ou égale à 45 %, par rapport à la matière sèche.
